# FASCICULE DE BREVET EUROPEEN

(11) **EP 3 492 826 B1**
(45) Date de publication et mention de la délivrance du brevet: **12.07.2023**
(21) Numéro de dépôt: 18204981.7
(22) Date de dépôt: 07.11.2018
(51) Int. Cl.: F24F 6/14, F24F 13/22

(54) **SYSTEME DE CLIMATISATION COMPRENANT UN EQUIPEMENT DE PRODUCTION DE FROID COUPLE A UN BRUMISATEUR**
KLIMAANLAGENSYSTEM, DAS EINE AUSSTATTUNG ZUR KÄLTEERZEUGUNG UMFASST, DIE AN EINEN ZERSTÄUBER GEKOPPELT IST
AIR CONDITIONING SYSTEM COMPRISING A COLD PRODUCTION MECHANISM COUPLED WITH A MIST GENERATOR

(30) Priorité: 30.11.2017 FR 1761412
(43) Date de publication de la demande: 05.06.2019
(73) Titulaire: Commissariat à l'Energie Atomique et aux Energies Alternatives, 75015 Paris (FR)
(72) Inventeur: DUMOULIN, Pierre, 38054 GRENOBLE cedex 09 (FR); BURGUN, Françoise, 38054 GRENOBLE cedex 09 (FR)
(74) Mandataire: Cabinet Nony

(56) Documents cités:
- WO-A1-2011/010382
- WO-A1-2016/097559
- JP-A- 2001 201 081
- JP-A- 2004 108 684
- US-A1- 2011 283 730

## Description

### Domaine technique

La présente invention concerne le domaine de la climatisation.

L'invention vise en particulier à améliorer le ressenti obtenu surtout l'été en exploitant l'humidité ambiante.

Par « espace » au sens de l'invention, on entend un compartiment fermé ou ouvert que l'on cherche à climatiser en abaissant la température. Ainsi un espace peut être l'habitacle d'un véhicule de transport, l'intérieur d'un bâtiment ou la périphérie d'un bâtiment.

Par « équipement de production de froid » au sens de l'invention, on entend le sens technologique usuel, à savoir un appareil adapté pour produire du froid et qui comprend un échangeur de chaleur, dit échangeur de refroidissement, au niveau de laquelle de la chaleur est absorbée, permettant de refroidir de l'air que l'on fait circuler à sa surface.

Par « boucle de réfrigération à compression de vapeur» au sens de l'invention, on entend le sens technologique usuel, à savoir un système réalisant une condensation de vapeur d'un fluide réfrigérant à la suite d'une compression, et son évaporation à la suite d'une détente.

Par « brumisateur » au sens de l'invention, on entend le sens usuel à savoir, un dispositif adapté pour projeter de l'eau en fine gouttelettes, sous la forme d'un brouillard d'eau

### Etat de la technique

Les systèmes de climatisation sont de nos jours omniprésents dans les véhicules et les bâtiments, afin d'abaisser et maintenir pendant les périodes de chaleur, une température agréable pour l'être humain, inférieure à celle de l'environnement extérieur.

Les brumisateurs sont également de plus en plus utilisés et permettent notamment d'abaisser la température ressentie par un individu au sein d'un espace.

Différentes technologies pour générer des gouttelettes sont connues. On peut citer par exemple les brumisateurs pneumatiques utilisant un gaz sous pression ou encore les brumisateurs piézoélectriques fonctionnant par vibrations de pièces en contact avec l'eau.

Les gouttelettes issues des brumisateurs sont soit générées à proximité de l'espace pour lequel elles sont destinées, soit entrainées par un flux d'air qui circule jusqu'à l'espace concerné. L'évaporation de ces gouttelettes provoque une baisse de la température du fait de la chaleur latente de vaporisation qui est alors absorbée. Or, cette baisse de température est souvent localisée au périmètre d'évaporation des gouttelettes et ne suffit donc pas toujours pour abaisser la température de l'espace, par exemple de l'habitacle du véhicule ou l'intérieur d'un bâtiment qui peut avoir déjà stocké beaucoup de chaleur.

C'est pourquoi, la plupart des systèmes de climatisation utilisés de nos jours sont équipés d'une boucle de réfrigération plus efficace pour abaisser la température rapidement.

Une boucle de réfrigération à compression de vapeur est un équipement de production de froid dans lequel un fluide de refroidissement peut changer partiellement ou totalement de phase. Lors d'un changement de phase au niveau de l'évaporateur, de la chaleur est absorbée provoquant ainsi une baisse de la température au niveau de l'évaporateur. A l'inverse au niveau du condenseur de vapeur du fluide de refroidissement à la suite d'une compression, de la chaleur est évacuée provoquant ainsi une augmentation de la température au niveau du condenseur. En faisant circuler de l'air chaud au niveau de l'évaporateur, on abaisse ainsi la température de l'air.

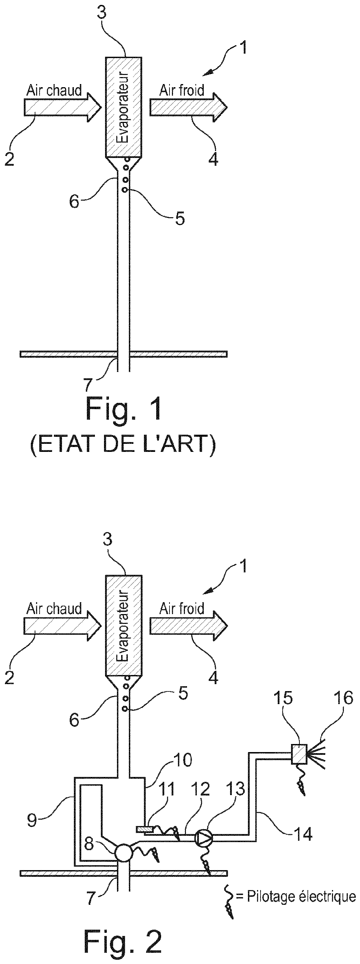

La figure 1 illustre le fonctionnement d'une partie d'un système de climatisation 1 selon l'état de l'art. Lorsque la climatisation est en marche, l'air chaud 2 est dirigé vers l'évaporateur 3, par convection forcée ou naturelle. L'air est ainsi refroidi à la surface de l'évaporateur 3. L'air froid 4 est ensuite acheminé vers un espace d'utilisation. La convection forcée peut être provoquée par une pompe, un ventilateur ou tout autre moyen d'acheminement de fluide. Pendant l'échange de chaleur au niveau de l'évaporateur 3, la vapeur d'eau présente dans l'air chaud peut se condenser. Comme illustré sur cette figure 1, les condensats 5 issus de cette condensation sont récupérés par gravité par un conduit de récupération 6 et évacués vers l'extérieur.

Lorsque le système de climatisation 1 est celui d'un véhicule, l'évacuation par gravité des condensats peut s'effectuer par un simple orifice 7 ou un boitier de sortie d'eau pouvant intégrer des fonctions spécifiques, comme l'étanchéité à l'air ou des atténuateurs acoustiques, non représentées sur la figure 1.

Il a déjà été proposé d'utiliser les condensats issus de l'évaporateur à des fins spécifiques dans un véhicule automobile.

Ainsi, dans le modèle d'utilité CN202032709U, les condensats récupérés de la boucle de réfrigération d'un véhicule automobile, sont stockés dans un réservoir, afin de les injecter en amont du condenseur de la réfrigération et pour améliorer la performance d'un système de freinage. Plus particulièrement, au niveau du condenseur, un atomiseur est utilisé pour asperger d'eau ce dernier, afin d'améliorer le rendement de la boucle de réfrigération.

Le brevet CN101949578 vise à exploiter les condensats d'une boucle de réfrigération pour refroidir l'intérieur de la cabine d'un véhicule automobile. Pour ce faire, il est prévu un réservoir de stockage de condensats qui est équipé d'un atomiseur ainsi que d'un capteur de niveau de liquide et d'un capteur de température. L'atomiseur génère de la brume dans le réservoir, brume qui est évacuée par dépression dans un conduit de rejet à l'air froid. Cette solution n'est pas viable notamment pour des véhicules ou bâtiments volumineux car elle nécessite de courtes distances entre le stockage et l'espace de diffusion. Or, dans ces applications, les distances entre le réservoir et l'espace de diffusion peuvent être importantes.

Par ailleurs, un des inconvénients majeurs des systèmes selon l'art antérieur est que l'eau est stockée dans le réservoir et peut y rester pendant de longues périodes si le dispositif n'est pas utilisé. Dans ces conditions, le risque de prolifération de microorganismes est très important. Ces derniers peuvent être sources de mauvaises odeurs et peuvent présenter un risque sanitaire. Plus particulièrement, la légionnelle qui prolifère à des températures de 25 à 45°C, typiquement observées dans un tel réservoir à l'arrêt du véhicule, présente le plus de risque en cas d'inhalation de gouttelettes contaminées.

La demande WO 2016/097559 A1 décrit un dispositif de projection de gouttelettes dans l'habitacle d'un véhicule. Avant d'être projetée, l'eau est stérilisée par chauffage dans un échangeur de chaleur.

L'autre inconvénient majeurs des solutions selon l'art antérieur est que lorsque le réservoir contient de l'eau et que la température du réservoir baisse et passe sous la barre des 0°C, de la glace peut se former. Si le niveau d'eau est suffisamment important le réservoir peut être endommagé, les autres éléments du système tels que les conduits ou le brumisateur peuvent être aussi endommagés.

Ainsi, tous les systèmes de climatisation selon l'état de l'art ne permettent pas d'assurer une utilisation efficace des condensats sans présenter un risque sanitaire ou un risque de dommage pour les systèmes.

Il existe donc un besoin général pour améliorer les systèmes de climatisation existants qui utilisent les condensats issus de la production de froid, notamment afin de pallier les inconvénients précités.

Le but de l'invention est de répondre au moins partiellement à ce besoin.

### Exposé de l'invention

Pour ce faire, l'invention a pour objet un système de climatisation selon la revendication 1.

Ainsi, l'invention consiste essentiellement à rajouter sur un équipement de production de froid, tel qu'une boucle de réfrigération à compression de vapeur, un réservoir des condensats issus de l'échangeur de refroidissement, tel que l'évaporateur dans la boucle, avec une pompe de mise en circulation de l'eau depuis le réservoir vers un brumisateur.

La pompe peut être mise en route directement selon la demande de l'utilisateur si les conditions de fonctionnement du système sont réunies.

Cette demande de mise en route peut également être indirecte par une unité de contrôle-commande qui donne les consignes de pilotage de la pompe, sans que l'utilisateur final n'ait à intervenir.

La mise en marche du brumisateur peut s'effectuer avant tout s'il y a de l'eau dans le réservoir et si l'hygrométrie dans la cabine est acceptable. En effet, le contrôle de l'hygrométrie est important car l'air ne doit pas déjà être saturé en humidité, afin d'éviter qu'il y ait de la condensation dans l'espace à brumiser, tel que l'habitacle d'un véhicule.

En outre, de préférence, la mise en marche peut également être conditionnée à une mesure de la température de l'eau stockée qui ne soit ni trop chaude ni trop froide.

En effet, faire fonctionner le système de climatisation avec brumisateur dans une gamme de températures acceptable, préférentiellement entre 3 et 25°C, permet d'éviter d'une part le risque de prolifération de microorganismes ou de froid qui peut endommager le réservoir ou d'autres éléments du système et d'autre part d'éviter l'envoi d'eau chaude qui ne rafraichirait pas les occupants de l'espace, tel que l'habitacle d'un véhicule.

Une gamme de températures entre 3 et 25°C est préférée, car jugée conforme aux contraintes sanitaires et matérielles.

Ainsi, de préférence, si la température effectivement mesurée des condensats stockés est en dehors de cette gamme, alors la vanne de vidange du réservoir est ouverte.

L'équipement de production de froid peut être avantageusement une boucle de réfrigération avec un fluide caloporteur comprenant un évaporateur avec une surface d'échange froide. Mais tout autre équipement existant pour la production de froid peut être envisagé.

Selon une variante avantageuse, le système selon l'invention comprend une vanne de vidange du réservoir reliée à un conduit d'évacuation d'eau dans l'environnement extérieur.

De préférence, la vanne de vidange est une vanne à commande électrique ou une vanne thermostatique, le thermostat de la vanne étant réglé pour fermer la vanne dans une gamme de températures prédéterminée, de préférence entre 3°C et 25°C, et pour l'ouvrir en dehors de cette gamme.

De préférence, le système comprend un capteur de température, agencé dans la partie inférieure du réservoir et adapté pour mesurer la température des condensats stockés.

Selon une variante, le système selon l'invention comprend un conduit de trop plein dont l'une de ses extrémités débouche dans la partie supérieure du réservoir, de sorte à évacuer l'eau en surplus dans le réservoir.

Avantageusement, l'autre extrémité du conduit de trop plein débouche dans le conduit d'évacuation d'eau vers l'environnement extérieur.

Selon une autre variante, la pompe à eau, le brumisateur et le cas échéant, la vanne de vidange, sont pilotés électriquement soit par une commande activée par un utilisateur soit automatiquement par une unité de contrôle-commande.

Alternativement, la pompe à eau, et le cas échéant, la vanne de vidange sont pilotés électriquement soit par une commande activée par un utilisateur soit automatiquement par une unité de contrôle-commande, tandis que le brumisateur est un brumisateur mécanique.

Avantageusement, un conduit de retour est agencé sur le conduit d'alimentation en eau du brumisateur mécanique entre la pompe à eau et le brumisateur.

Selon l'invention, le système selon l'invention comprend un conduit de dérivation relié entre l'échangeur de refroidissement et le réservoir, de sorte à détourner une partie de l'air froid vers le réservoir, afin de refroidir les condensats stockés dans le réservoir.

Selon une autre variante le système selon l'invention comprend un orifice de remplissage d'eau froide ou de glace, distincte des condensats, l'orifice étant ménagé sur la partie supérieure du réservoir.

De manière avantageuse, l'équipement de production de froid comprend une boucle de réfrigération à compression de vapeur dont l'évaporateur est relié au conduit de récupération des condensats.

Selon un mode de réalisation, le procédé de fonctionnement du système selon l'invention comprend les étapes suivantes, lorsque l'équipement de production de froid est en marche :
a/ contrôle du niveau d'eau dans le réservoir de stockage des condensats par le capteur de niveau ;
b/ contrôle du niveau d'humidité dans l'air à l'intérieur de l'espace à brumiser ;
c/ si le niveau d'eau suivant l'étape a/ est suffisant et si l'humidité dans l'espace n'est pas saturée, alors mise en marche de la pompe et du brumisateur.

Selon un autre mode de réalisation, le procédé de fonctionnement du système selon l'invention comprend les étapes suivantes, lorsque l'équipement de production de froid est à l'arrêt ou la température des condensats dans le réservoir est en dehors d'une gamme de températures prédéterminée:
a1/ ouverture de la vanne de vidange ;
b1/ mise à l'arrêt de la pompe et du brumisateur.

Le système de climatisation selon l'invention peut être utilisé pour la climatisation de l'habitacle d'un véhicule, par exemple des voitures ou des wagons de train, ou de bâtiments de tous types ainsi que le périmètre des bâtiments.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique d'une partie d'un système de climatisation selon l'état de l'art seul l'évaporateur d'une boucle de réfrigération à compression de vapeur étant représenté;
- la figure 2 est une vue schématique d'une partie d'un système de climatisation ne faisant pas partie de l'invention, seul l'évaporateur d'une boucle de réfrigération à compression de vapeur étant représenté;
- les figures 3 à 8 reprennent la figure 2 et montrent les différentes configurations de fonctionnement ou non de la partie du système de climatisation ne faisant pas partie de la présente invention ;
- la figure 9 est une vue schématique d'une première variante de réalisation d'une partie de système de climatisation ne faisant pas partie de la présente invention ;
- la figure 10 est une vue schématique d'une deuxième variante de réalisation d'une partie de système de climatisation ne faisant pas partie de la présente invention ;
- la figure 11 est une vue d'ensemble schématique d'un exemple d'une partie de système de climatisation selon la présente invention ;
- la figure 12 est une vue d'ensemble schématique d'une variante de réalisation d'une partie de système de climatisation ne faisant pas partie de la présente invention.

La figure 1 relative à un système de climatisation selon l'état de l'art a déjà été commentée en préambule. Elle ne sera donc pas décrite par la suite.

Pour des raisons de clarté, les mêmes éléments d'un système de climatisation portent les mêmes références sur l'ensemble des figures.

Aux figures 2 à 12, on a représenté un système de climatisation 1 ne faisant pas partie de l'invention qui intègre un brumisateur 15 afin de générer des gouttelettes dans un espace, tel qu'un habitacle de véhicule.

Au lieu d'être évacués vers l'extérieur comme dans les systèmes de climatisation actuellement utilisés, les condensats 5 issus de l'évaporateur 3 d'une boucle de réfrigération à compression de vapeur sont collectés par gravité dans un réservoir de stockage 10 par l'intermédiaire d'un conduit de récupération 6.

Une vanne de vidange 8 du réservoir est agencée au fond du réservoir 10, de préférence au point le plus bas du réservoir afin d'éviter le risque d'accumulation locale d'eau lorsque l'eau stockée est vidangée. Cette vanne est avantageusement pilotée électriquement.

La vanne de vidange 8 débouche sur un conduit d'évacuation 7 de l'eau dans l'environnement extérieur.

Un capteur de niveau 11 est également agencé dans la partie inférieure du réservoir 10, afin de déterminer le niveau d'eau stockée dans le réservoir.

En outre, un capteur de température peut équiper le réservoir afin de mesurer la température de l'eau stockée dans le réservoir. Ce capteur est avantageusement placé dans la partie inférieure du réservoir 10.

Le réservoir de stockage 10 est relié à une pompe à eau 13 par l'intermédiaire d'un conduit d'alimentation 12.

La pompe à eau 13 est quant à elle reliée à un brumisateur 15 par un conduit d'amenée d'eau 14.

Avantageusement, il est prévu un conduit de trop plein 9 raccordant la partie supérieure du réservoir 9 au conduit d'évacuation 7, ce qui permet ainsi d'évacuer le surplus d'eau en cas de trop plein.

De préférence, tous les composants actifs du système 1, à savoir le capteur de niveau 11 ainsi que la pompe 13 et le brumisateur 15, sont pilotés électriquement.

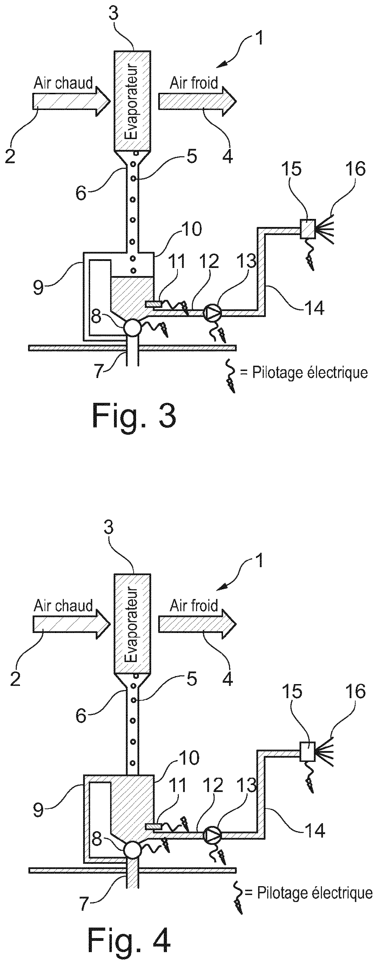

On décrit maintenant le fonctionnement du système de climatisation en référence aux figures 3 à 8.

Lorsque la climatisation est en marche les condensats 5 s'accumulent dans le réservoir 10, la vanne de vidange 8 étant fermée.

Si un utilisateur souhaite activer le brumisateur, et si le niveau d'eau est suffisant pour activer la pompe à eau 13, alors celle-ci ainsi que le brumisateur 15 sont mis en marche. L'eau est alors acheminée vers le brumisateur 15 et des gouttelettes 16 sont ensuite générées dans l'espace (figure 3).

Selon un mode de fonctionnement avantageux, il est possible de conditionner le déclenchement de la pompe 13 et du brumisateur 15, à une température d'eau au sein du réservoir 10 qui soit dans une gamme de températures prédéterminée. La gamme de température de 3 à 25°C est jugée conforme aux contraintes sanitaire et matérielle de fonctionnement, en évitant notamment une prolifération de microorganismes comme la légionnelle.

La demande de mise en route du système peut être directe c'est-à-dire avec un utilisateur humain qui déclenche la commande ou indirecte par une unité de contrôle-commande qui donne les consignes de pilotage sans que l'utilisateur final n'ait à intervenir.

Le fonctionnement du système 1 est de préférence conditionné à un taux d'humidité de l'air dans l'espace. Ainsi, l'hygrométrie dans l'espace peut être vérifiée, ce paramètre est d'autant plus important que l'espace est fermé, comme dans l'habitacle d'un véhicule ou dans une pièce fermée. Ainsi, si le taux d'humidité est trop important dans l'espace, le brumisateur ne sera pas activé, afin d'éviter la condensation sur des surfaces plus froides, comme les pares brises et les vitres.

Il peut arriver que la consommation d'eau par le brumisateur 15 soit inférieure à la quantité des condensats entrant dans le réservoir 10 ou que le brumisateur soit en arrêt. Ainsi, l'eau s'accumule dans le réservoir 10 avec la vanne de vidange 8 fermée.

Lorsque le niveau d'eau atteint le trop-plein, il est évacué par le conduit de trop plein 9 puis par le conduit d'évacuation 7 dans l'environnement extérieur (figure 4). L'eau excédentaire est donc évacuée sans qu'il soit besoin d'ouvrir la vanne de vidange 8.

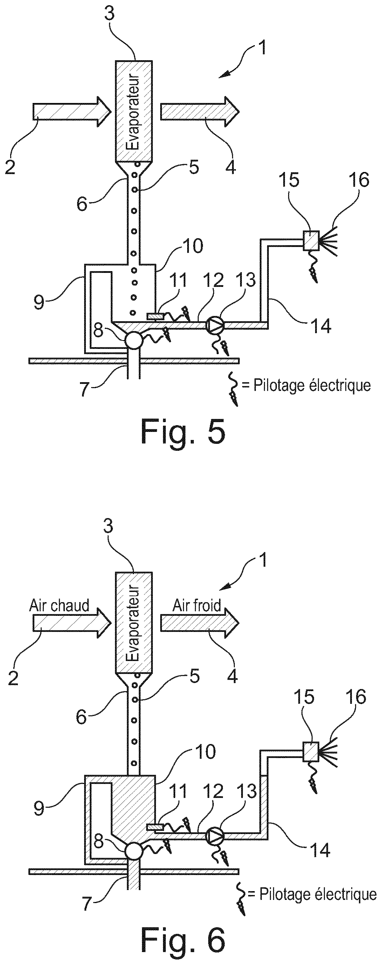

A l'inverse, lorsque la consommation en eau est plus importante que les condensats qui s'accumulent dans le réservoir 10 ou que simplement le niveau d'eau dans le réservoir 10 est trop bas, la pompe à eau 13 est mise à l'arrêt, la vanne de vidange 8 restant fermée (figure 5).

La figure 6 représente la configuration de fonctionnement, lorsque le brumisateur 15 n'est pas actionné, bien que la production de froid par l'équipement est réalisée: la pompe 13 est mise à l'arrêt et la vanne de vidange 8 reste fermée de sorte à pouvoir fournir de l'eau immédiatement à la pompe en cas de demande immédiate de besoin du brumisateur 15 (figure 6). Ainsi, même si le réservoir 13 devient complètement rempli par les condensats 5 qui s'écoulent par gravité, le conduit de trop plein 9 et le conduit d'évacuation 7 évacuent l'eau par gravité vers l'environnement extérieur (figure 6).

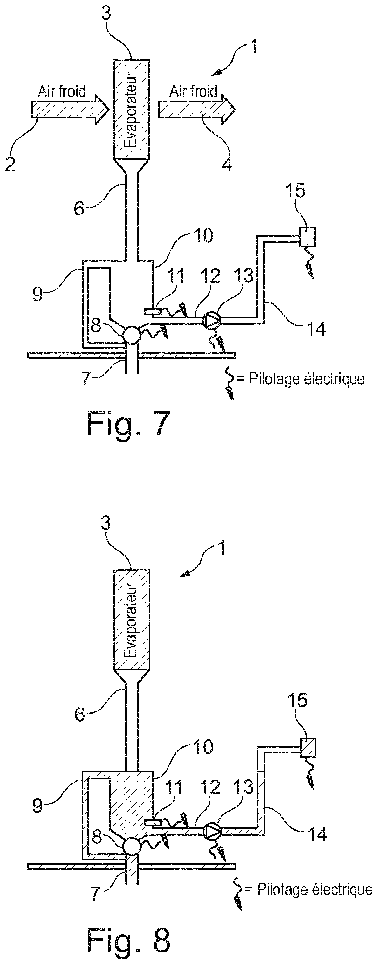

Lorsque la température ambiante est froide, c'est-à-dire typiquement inférieure à 3°C, et que l'équipement de production de froid est soit à l'arrêt soit en marche, la pompe 13 est mise à l'arrêt et la vanne de vidange 8 reste ouverte, afin d'éviter le gel des condensats dans les différents composants du système de climatisation (figure 7).

Selon un mode de fonctionnement avantageux, si le capteur de température détecte une température chaude, typiquement supérieure à 25 ou 35°C, propice à la prolifération de microorganismes, notamment de la légionnelle, la pompe 13 est arrêtée et la vanne de vidange 8 est ouverte, afin de vidanger le réservoir 10 (figure 8). Ce mode de fonctionnement peut par exemple se produire lorsqu'un véhicule équipé du système de climatisation, est à l'arrêt ou non et que l'équipement ne produit pas de froid.

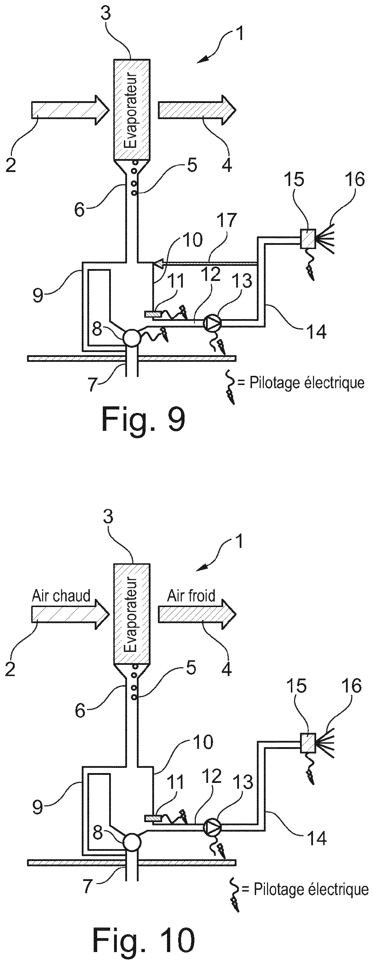

La figure 9 représente une variante dans laquelle le brumisateur électrique est remplacé par un brumisateur mécanique. Cela permet d'éviter un capteur au niveau du brumisateur.

Dans ce cas, dès que la production du froid est en marche et que le niveau d'eau est suffisant, la pompe 13 est en marche en permanence et achemine de l'eau au brumisateur mécanique 15.

Un conduit de retour 17 de l'eau dans le réservoir 10 est installé dans le conduit d'alimentation 14 qui achemine l'eau de la pompe 13 au brumisateur 15. Un tel conduit 17 est avantageux, car le brumisateur mécanique bloque le débit d'eau envoyé dans l'espace, tel qu'une cabine de véhicule. Et du fait que la pompe 13 n'a pas d'information sur l'état de fonctionnement du brumisateur, il faut éviter de la faire surchauffer. Ce conduit de retour 17 permet d'assurer un débit permanent dans la pompe 13 et ainsi de la protéger contre les surchauffes éventuelles.

De préférence, le conduit de retour 17 peut comprendre un clapet destiné à être fermé lorsque le brumisateur mécanique 15 est en marche. Avec un tel clapet, le débit de retour au réservoir 10 est bloqué lorsque le brumisateur 15 est en fonctionnement.

La figure 10 représente une variante selon laquelle en lieu et place d'une vanne électrique, la vanne de vidange 8 est une vanne thermostatique. Une vanne thermostatique a pour avantage de pouvoir d'avoir deux seuils d'ouverture en fonction de la température mesurée de l'eau, ici de préférence respectivement à moins de 3°C et à plus de 25°C. Ainsi, lorsque la température de l'eau est dans une gamme de températures entre les deux seuils d'ouverture, soit de préférence, entre 3 et 25°C, la vanne thermostatique 8 reste fermée. Si un des seuils est dépassé, alors la vanne s'ouvre. Les vannes thermostatiques communément utilisées sont à base de cire, il est possible d'adapter les seuils en choisissant une cire en particulier. Il est également possible par exemple d'élever le seuil de 25°C à 35°C, à condition que la durée de stockage de l'eau ne soit pas trop longue pour la prolifération de la légionnelle. En effet, le développement des microorganismes est lié à la température du milieu, mais aussi à la durée de stagnation de l'eau. Dans cette variante de réalisation, le capteur de température peut être supprimé, la vanne thermostatique 8 intégrant déjà un thermostat.

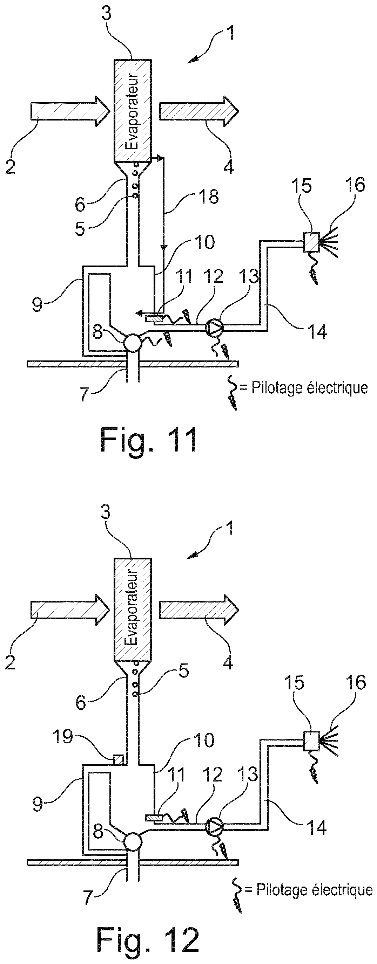

La figure 11 est un exemple de l'invention selon laquelle un conduit de dérivation 18 relie le circuit d'air froid de l'évaporateur 3 au réservoir 10, ce qui permet de dévier une partie de l'air froid vers le réservoir 10. Cela permet par exemple d'abaisser la température de l'eau dans le réservoir 10 par bullage. Le bullage permet d'accélérer le refroidissement de l'eau au démarrage de la production de froid. Elle permet également de maintenir l'eau qui commence à stagner dans le réservoir à une température fraîche, pendant l'arrêt du brumisateur.

La figure 12 représente encore une autre variante ne faisant pas partie de l'invention, selon laquelle le réservoir 10 est muni d'un orifice de remplissage 19 par lequel il est possible de remplir le réservoir 10 avec de l'eau froide ou de la glace, distincte des condensats collectés 5. Ce remplissage peut avoir lieu par exemple avant la mise en fonctionnement de la pompe 13 et du brumisateur 15. On veillera bien entendu à assurer une maitrise de la température de l'eau dans le réservoir 10, afin d'éviter une vidange inopinée parce que le seuil bas de la température est atteint.

D'autres variantes et améliorations peuvent être apportées sans pour autant sortir du cadre de l'invention tel que définit dans les revendications.

Par exemple, si dans les modes de réalisation illustrés, l'équipement de froid est une boucle de réfrigération par compression de vapeur avec comme échangeur de refroidissement, l'évaporateur, on peut envisager d'autres équipements de production de froid.

L'invention n'est pas limitée aux exemples qui viennent d'être décrits ; on peut notamment combiner entre elles des caractéristiques des exemples illustrés au sein de variantes non illustrées tout en restant dans le cadre des revendications.

## Revendications

1. Système de climatisation (1) d'un espace comprenant :
- un équipement de production de froid, adapté pour refroidir la température de l'espace, l'équipement comprenant un échangeur de refroidissement (3) adapté pour laisser circuler à travers lui de l'air humide à refroidir;
- un conduit de récupération (6) par gravité de condensats (5) issus du refroidissement d'air humide dans l'équipement de production de froid ;
- un réservoir (10) relié au conduit de récupération, pour stocker les condensats ;
- un capteur de niveau (11), agencé dans la partie inférieure du réservoir, adapté pour mesurer le volume d'eau des condensats stockés ;
- une pompe à eau (13), reliée au réservoir par l'intermédiaire d'un conduit d'évacuation (12) des condensats stockés,
- un brumisateur (15) relié à la pompe à eau, afin de générer des gouttelettes dans l'espace,
**caractérisé en ce que** le système de climatisation (1) comprend en outre une vanne de vidange (8) du réservoir reliée à un conduit d'évacuation (7) d'eau dans l'environnement extérieur, et
un conduit de dérivation (18) relié entre l'échangeur de refroidissement et le réservoir, de sorte à détourner une partie de l'air froid vers le réservoir afin de refroidir les condensats stockés dans le réservoir.

2. Système de climatisation selon la revendication1, la vanne de vidange étant à commande électrique.

3. Système de climatisation selon la revendication 1, la vanne de vidange étant une vanne thermostatique, le thermostat de la vanne étant réglé pour fermer la vanne dans une gamme de températures prédéterminée, de préférence entre 3°C et 25°C, et pour l'ouvrir en dehors de cette gamme.

4. Système de climatisation selon l'une des revendications précédentes, comprenant un capteur de température (11), agencé dans la partie inférieure du réservoir, adapté pour mesurer la température des condensats stockés.

5. Système de climatisation selon l'une des revendications précédentes, comprenant un conduit de trop plein (9) dont l'une de ses extrémités débouche dans la partie supérieure du réservoir, de sorte à évacuer l'eau en surplus dans le réservoir.

6. Système de climatisation selon la revendication 5 en combinaison avec l'une des revendications1 à 4, l'autre extrémité du conduit de trop plein débouchant dans le conduit d'évacuation d'eau vers l'environnement extérieur.

7. Système de climatisation selon l'une des revendications précédentes, comprenant une commande configurée pour piloter électriquement la pompe à eau, le brumisateur et le cas échéant, la vanne de vidange , la commande configurée étant soit une commande activée par un utilisateur soit une unité de contrôle-commande automatique.

8. Système de climatisation selon l'une des revendications 1 à 6, comprenant une commande configurée pour piloter électriquement la pompe à eau, et le cas échéant, la vanne de vidange , la commande configurée étant soit une commande activée par un utilisateur soit une unité de contrôle-commande automatique, tandis que le brumisateur est un brumisateur mécanique.

9. Système de climatisation selon la revendication 8, un conduit de retour (17) étant agencé sur le conduit d'alimentation en eau du brumisateur mécanique entre la pompe à eau et le brumisateur.

10. Système de climatisation selon l'une des revendications précédentes, comprenant un orifice de remplissage (19) d'eau froide ou de glace, distincte des condensats, l'orifice étant ménagé sur la partie supérieure du réservoir.

11. Système de climatisation selon l'une des revendications précédentes, l'équipement de production de froid comprenant une boucle de réfrigération à compression de vapeur dont l'évaporateur est relié au conduit de récupération des condensats.

12. Procédé de fonctionnement du système de climatisation selon l'une des revendications précédentes, comprenant les étapes suivantes, lorsque l'équipement de production de froid est en marche :
a/ contrôle du niveau d'eau dans le réservoir de stockage des condensats par le capteur de niveau ;
b/ contrôle du niveau d'humidité dans l'air à l'intérieur de l'espace à brumiser ;
c/ si le niveau d'eau suivant l'étape a/ est suffisant et si l'humidité dans l'espace n'est pas saturée, alors mise en marche de la pompe et du brumisateur.

13. Procédé de fonctionnement du système de climatisation selon l'une des revendications 1 à 11, comprenant les étapes suivantes lorsque l'équipement de production de froid est à l'arrêt ou la température des condensats dans le réservoir est en dehors d'une gamme de températures prédéterminée:
a1/ ouverture de la vanne de vidange ;
b1/ mise à l'arrêt de la pompe et du brumisateur.

14. Utilisation d'un système selon l'une des revendications 1 à 11 pour la climatisation d'un habitacle de véhicule, d'un bâtiment et/ou la périphérie du bâtiment.

## Patentansprüche

1. System zur Klimatisierung (1) eines Raumes, umfassend:
- eine Kälteerzeugungsausrüstung, die dazu geeignet ist, die Temperatur des Raumes zu senken, wobei die Ausrüstung einen Kühltauscher (3) umfasst, der dazu geeignet ist, abzukühlende feuchte Luft durch ihn hindurchströmen zu lassen;
- eine Leitung (6) zur Rückgewinnung von Kondensat (5), das aus der Kühlung von feuchter Luft in der Kälteerzeugungsausrüstung stammt, durch Schwerkraft;
- einen mit der Rückgewinnungsleitung verbundenen Behälter (10) zum Speichern des Kondensats;
- einen Füllstandssensor (11), der im unteren Teil des Behälters angeordnet und dazu geeignet ist, das Wasservolumen des gespeicherten Kondensats zu messen;
- eine Wasserpumpe (13), die über eine Leitung (12) zum Abführen des gespeicherten Kondensats mit dem Behälter verbunden ist,
- einen mit der Wasserpumpe verbundenen Zerstäuber (15) zum Erzeugen von Tröpfchen im Raum, **dadurch gekennzeichnet, dass** das Klimatisierungssystem (1) ferner ein Ventil (8) zum Entleeren des Behälters umfasst, das mit einer Leitung (7) zum Abführen von Wasser in eine äußere Umgebung verbunden ist, und eine Bypassleitung (18), die zwischen dem Kühltauscher und dem Behälter angeordnet ist, um einen Teil der kalten Luft zum Behälter umzuleiten, um das im Behälter gespeicherte Kondensat zu kühlen.

2. Klimatisierungssystem nach Anspruch 1, wobei das Entleerungsventil elektrisch gesteuert wird.

3. Klimatisierungssystem nach Anspruch 1, wobei das Entleerungsventil ein Thermostatventil ist, wobei der Thermostat des Ventils so eingestellt ist, dass er das Ventil innerhalb eines vorbestimmten Temperaturbereichs, vorzugsweise zwischen 3°C und 25°C, schließt und außerhalb dieses Bereichs öffnet.

4. Klimatisierungssystem nach einem der vorangehenden Ansprüche, umfassend einen Temperatursensor (11), der im unteren Teil des Behälters angeordnet und dazu geeignet ist, die Temperatur des gespeicherten Kondensats zu messen.

5. Klimatisierungssystem nach einem der vorangehenden Ansprüche, umfassend eine Überlaufleitung (9), deren eines Ende in den oberen Teil des Behälters mündet, um überschüssiges Wasser aus dem Behälter abzuleiten.

6. Klimatisierungssystem nach Anspruch 5 in Kombination mit einem der Ansprüche 1 bis 4, wobei das andere Ende der Überlaufleitung in die Leitung zum Abführen von Wasser in die äußere Umgebung mündet.

7. Klimatisierungssystem nach einem der vorangehenden Ansprüche, umfassend eine Steuerung, die so konfiguriert ist, dass sie die Wasserpumpe, den Zerstäuber und gegebenenfalls das Entleerungsventil elektrisch steuert, wobei die konfigurierte Steuerung entweder eine benutzeraktivierte Steuerung oder eine automatische Steuer- und Regeleinheit ist.

8. Klimatisierungssystem nach einem der Ansprüche 1 bis 6, umfassend eine Steuerung, die so konfiguriert ist, dass sie die Wasserpumpe und gegebenenfalls das Entleerungsventil elektrisch steuert, wobei die konfigurierte Steuerung entweder eine benutzeraktivierte Steuerung oder eine automatische Steuer- und Regeleinheit ist, während der Zerstäuber ein mechanischer Zerstäuber ist.

9. Klimatisierungssystem nach Anspruch 8, wobei an der Wasserzufuhrleitung des mechanischen Zerstäubers zwischen der Wasserpumpe und dem Zerstäuber eine Rücklaufleitung (17) angeordnet ist.

10. Klimatisierungssystem nach einem der vorangehenden Ansprüche, umfassend eine Öffnung (19) zum Einfüllen von kaltem Wasser oder Eis, das sich vom Kondensat unterscheidet, wobei die Öffnung im oberen Teil des Behälters angeordnet ist.

11. Klimatisierungssystem nach einem der vorangehenden Ansprüche, wobei die Kälteerzeugungsausrüstung einen Dampfkompressionskühlkreislauf umfasst, dessen Verdampfer mit der Kondensatrückgewinnungsleitung verbunden ist.

12. Verfahren zum Betreiben des Klimatisierungssystems nach einem der vorangehenden Ansprüche, umfassend die folgenden Schritte, wenn die Kälteerzeugungsausrüstung in Betrieb ist:
a/ Kontrolle des Wasserstands im Kondensatspeicherbehälter durch den Füllstandssensor;
b/ Kontrolle des Feuchtigkeitsgehalts der Luft innerhalb des zu besprühenden Raumes;
c/ wenn der Wasserstand nach Schritt a/ ausreichend und die Feuchtigkeit im Raum nicht gesättigt ist, Inbetriebnahme der Pumpe und des Zerstäubers.

13. Verfahren zum Betreiben des Klimatisierungssystems nach einem der Ansprüche 1 bis 11, umfassend die folgenden Schritte, wenn die Kälteerzeugungsausrüstung außer Betrieb ist oder die Temperatur des Kondensats im Behälter außerhalb eines vorbestimmten Temperaturbereichs liegt:
a1/ Öffnen des Entleerungsventils;
b1/ Außerbetriebnahme der Pumpe und des Zerstäubers.

14. Verwendung eines Systems nach einem der Ansprüche 1 bis 11 zur Klimatisierung des Innenraums eines Fahrzeugs, eines Gebäudes und/oder der Peripherie des Gebäudes.

## Claims

1. System (1) for air-conditioning a space, comprising:
- cold production equipment designed to cool the temperature in the space, the equipment comprising a cooling exchanger (3) designed to allow humid air to be cooled to circulate through it;
- a pipe (6) for recovering, by gravity, condensates (5) originating from the cooling of humid air in the cold production equipment;
- a tank (10) connected to the recovery pipe (6), for storing the condensates;
- a level sensor (11) arranged in the lower part of the tank and designed to measure the volume of water of the stored condensates;
- a water pump (13) connected to the tank by a pipe (12) for discharging the stored condensates,
- a mister (15) connected to the water pump, in order to generate droplets in the space,
**characterized in that** the air conditioning system (1) further comprises a valve (8) for draining the tank, said valve being connected to a pipe (7) for discharging water into the external environment, and
a bypass pipe (18) connected between the cooling exchanger and the tank, so as to divert part of the cold air to the tank in order to cool the condensates stored in the tank.

2. Air conditioning system according to Claim 1, the drain valve being electrically controlled.

3. Air conditioning system according to Claim 1, the drain valve being a thermostatic valve, the thermostat of the valve being regulated to close the valve within a predetermined temperature range, preferably between 3°C and 25°C, and to open it outside this range.

4. Air conditioning system according to one of the preceding claims, comprising a temperature sensor (11) arranged in the lower part of the tank and designed to measure the temperature of the stored condensates.

5. Air conditioning system according to one of the preceding claims, comprising an overflow pipe (9), one of the ends thereof opening out in the upper part of the tank so as to discharge excess water in the tank.

6. Air conditioning system according to Claim 5 in combination with one of Claims 1 to 4, the other end of the overflow pipe opening out into the pipe for discharging water to the external environment.

7. Air conditioning system according to one of the preceding claims, comprising a control means configured to electrically operate the water pump, the mister and, where appropriate, the drain valve, the configured control means either being a control means activated by a user or an automatic monitoring-control unit.

8. Air conditioning system according to one of Claims 1 to 6, comprising a control means configured to electrically operate the water pump and, where appropriate, the drain valve, the configured control means either being a control means activated by a user or an automatic monitoring-control unit, whereas the mister is a mechanical mister.

9. Air conditioning system according to Claim 8, a return pipe (17) being arranged on the water supply pipe of the mechanical mister between the water pump and the mister.

10. Air conditioning system according to one of the preceding claims, comprising a filling orifice (19) for cold water or ice, separate from the condensates, the orifice being provided on the upper part of the tank.

11. Air conditioning system according to one of the preceding claims, the cold production equipment comprising a vapour compression refrigeration loop, the evaporator of which is connected to the pipe for recovering the condensates.

12. Method for operating the air conditioning system according to one of the preceding claims, comprising the following steps when the cold production equipment is running:
a/ monitoring the water level in the tank for storing the condensates by way of the level sensor;
b/ monitoring the humidity level in the air inside the space to be misted;
c/ if the water level following step a/ is sufficient and if the humidity in the space is not saturated, switching on the pump and the mister.

13. Method for operating the air conditioning system according to one of Claims 1 to 11, comprising the following steps when the cold production equipment is at a standstill or the temperature of the condensates in the tank is outside a predetermined temperature range:
a1/ opening the drain valve;
b1/ switching off the pump and the mister.

14. Use of a system according to one of Claims 1 to 11 for air-conditioning a vehicle interior, a building and/or the periphery of the building.
